# EUROPÄISCHE PATENTSCHRIFT

(11) **EP 1 547 499 B1**
(45) Veröffentlichungstag und Bekanntmachung des Hinweises auf die Patenterteilung: **12.03.2008**
(21) Anmeldenummer: 05075624.6
(22) Anmeldetag: 15.03.2005
(51) Int. Cl.: A47J 31/06

(54) **Produktbehälter**
Product container
Conteneur de produit

(30) Priorität: 16.03.2004 NL 1025736
(43) Veröffentlichungstag der Anmeldung: 29.06.2005
(73) Patentinhaber: Stas, Marinus Barbara Arnoldus Maria, 5527 GR Hapert (NL)
(72) Erfinder: Stas, Marinus Barbara Arnoldus Maria, 5527 GR Hapert (NL)
(74) Vertreter: Valkonet, Rutger

(56) Entgegenhaltungen:
- WO-A-97/39668
- DE-U1- 20 218 335
- FR-A- 1 289 610
- US-A- 5 947 004

## Beschreibung

Die Erfindung betrifft einen Produktbehälter, umfassend einen zum Teil für Flüssigkeit durchlässigen Körper, der gefüllt werden kann mit einem Produkt, wie gemahlenem Kaffee, und einen zum Teil für Flüssigkeit durchlässigen Deckel, der auf dem Körper befestigt werden kann. Produktbehälter dieses Typs werden häufig im Haushalt benutzt, zum Beispiel um schnell eine Tasse Kaffee zu kochen. Dabei wird eine elektrische Kaffeemaschine verwendet, in die der Behälter eingesetzt werden kann und wobei von der Kaffeemaschine erhitztes Wasser durch den Behälter hindurch gepresst wird. Ein wichtiger Vorteil ist, dass der Kaffee einfach und schnell gekocht werden kann. Außerdem hat der Kaffee konstante Qualität. Ein Nachteil ist, dass die bekannten Produktbehälter nach der Benutzung weggeworfen werden und auf die Weise dem immer wachsenden Abfallberg Nachschub leisten.

Der erfindungsgemäße Produktbehälter wirkt diesem Problem entgegen und hat das Kennzeichen gemäß Anspruch 1. Der Deckel kann lösbar auf dem Körper befestigt werden, wodurch er nach seiner Benutzung geöffnet und gereinigt werden kann und somit erneut benutzt werden kann. Ein wichtiger zusätzlicher Vorteil ist, dass der Produktbehälter mit Kaffee oder einem Kaffeegemisch oder irgendeinem anderen Gemisch gefüllt werden kann, das auf den Geschmack des Benutzers abgestimmt ist. Dies im Gegensatz zu den bekannten Kaffeebehältern, die mit einer beschränkten Anzahl von Kaffeesorten gefüllt sind. Ein gattungsgemäßer Produktbehälter ist offenbart in Dokument DE20218335 U.

Eine vorteilhafte Ausführungsform, mit der der Preis des erfindungsgemäßen Produktbehälters akzeptabel bleibt, ist dadurch gekennzeichnet, dass der Körper und der Deckel aus Kunststoff hergestellt sind. Ein wichtiger zusätzlicher Vorteil ist, dass bei einem so ausgeführten Produktbehälter der Deckel fest und dennoch lösbar auf den Körper gesetzt werden kann, da Kunststoff ausreichend flexibel ist.

Der Körper und der Deckel umfassen jeweils ein ringförmiges Außenteil sowie ein scheibenförmiges zentrales Teil, das mit speichenförmigen Verbindungsteilen mit dem Außenteil verbunden ist. Vorzugsweise bilden dabei das scheibenförmige zentrale Teil und die Speichen eine Unterstützung für ein für Flüssigkeit durchlässiges Teil.

Eine weitere vorteilhafte Ausführungsform ist dadurch gekennzeichnet, dass das für Flüssigkeit durchlässige Teil aus Gaze hergestellt ist, deren Rand bevorzugt zum Beispiel während eines Spritzgußverfahrens in den Kunststoff eingebettet wird, so dass Lecken von Kaffeeteilchen ausgeschlossen ist. Dies ist von großer Bedeutung, weil bei im Handel erhältlichen Kaffeemaschinen, in die der Produktbehälter eingesetzt werden soll, der Kaffee über eine sehr kleine Öffnung abgeführt wird, um eine von Benutzern geschätzte Schaumbildung zu steigern. Lecken des Produktbehälters könnte dann zur Verstopfung dieser kleinen Öffnung führen.

Eine weitere vorteilhafte Ausführungsform ist dadurch gekennzeichnet, dass der Deckel an einem Außenrand mit Vorsprüngen versehen ist, die, wenn der Deckel auf den Körper aufgesetzt ist, außerhalb des Körpers herausragen und auf diese Weise einen Angriffspunkt zum Lösen des Deckels bilden.

Eine vorteilhafte Ausführungsform nach einem weiteren Aspekt der Erfindung ist dadurch gekennzeichnet, dass das scheibenförmige zentrale Teil des Körpers ist mit einem stiftförmigen Vorsprung versehen ist, der derart angeordnet ist, dass er die kleine Öffnung nahezu verschließt. Gegebenenfalls an der Außenseite vorhandener gemahlener Kaffee wird dann am Rand des stiftförmigen Vorsprungs aufgehalten, während der Kaffee durch einen engen Spalt zwischen dem stiftförmigen Vorsprung und einem Boden, in dem sich die Öffnung befindet, auslecken kann.

Eine weitere vorteilhafte Ausführungsform, bei der die Toleranzen hinsichtlich der Höhe des Produktbehälters und der Länge des stiftförmigen Vorsprungs nahezu keine Rolle mehr spielen, ist dadurch gekennzeichnet, dass der stiftförmige Vorsprung jedenfalls zum Teil mit einem zentralen Schacht und mit wenigstens einem Verbindungskanal zwischen dem zentralen Schacht und einer Außenseite des stiftförmigen Vorsprungs versehen ist. Der stiftförmige Vorsprung kann dann auf dem Boden abgestützt sein, wobei der Kaffee über den wenigstens einen Verbindungskanal und den zentralen Schacht zu der Öffnung hin fließen kann.

In einer weiteren vorteilhaften Ausführungsform ist der wenigstens eine Verbindungskanal an der Außenseite des stiftförmigen Vorsprungs bedeckt mit Gaze, wodurch Kaffeeteilchen aufgehalten werden und der wenigstens eine Verbindungskanal nicht verstopft werden kann.

Eine sehr vorteilhafte Ausführungsform, die sich einfach herstellen läßt und sehr gute Ergebnisse bringt, ist dadurch gekennzeichnet, dass der wenigstens eine Verbindungskanal wenigstens einen ab einem freien Ende des stiftförmigen Vorsprungs verlaufenden Schlitz umfasst. Die Breite des Schlitzes ist dabei so gewählt, dass Kaffeeteilchen, die die Öffnung verstopfen könnten, den Schlitz nicht passieren können, während der Schlitz durch seine relativ große Länge ebenfalls nicht verstopft werden kann.

Die Erfindung wird nun näher an Hand der folgenden Figuren erläutert, wobei:
Figur 1A eine mögliche Ausführungsform eines Körpers eines nicht erfindungsgemäßen Produktbehälters in Draufsicht darstellt;
Figur 1B diesen Körper in der Seitenansicht darstellt;
Figur 2A eine mögliche Ausführungsform eines Deckels eines nicht erfindungsgemäßen Produktbehälters in Draufsicht darstellt;
Figur 2B diesen Deckel in der Seitenansicht darstellt;
Figur 3A schematisch einen in eine Kaffeemaschine eingesetzten nicht erfindungsgemäßen Produktbehälter darstellt;
Figur 3B schematisch einen in eine Kaffeemaschine eingesetzten erfindungsgemäßen Behälter, der mit einem stiftförmigen Vorsprung versehen ist, darstellt;
Figur 4A mehr im Detail eine mögliche Ausführungsform eines stiftförmigen Vorsprungs darstellt;
Figur 4B einen alternativen stiftförmigen Vorsprung darstellt;
Figur 4C einen weiteren alternativen stiftförmigen Vorsprung darstellt;
Figur 4D einen weiteren alternativen stiftförmigen Vorsprung darstellt.

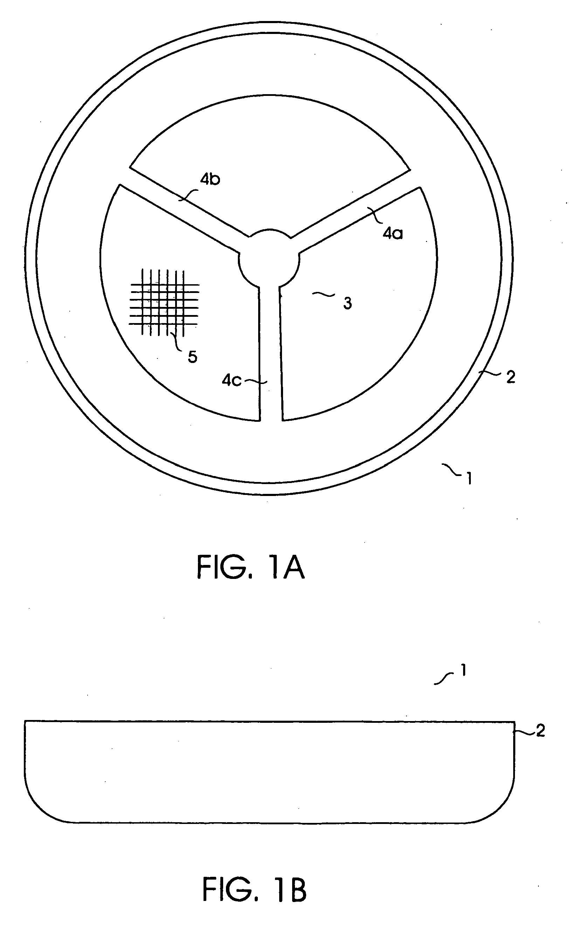

Figur 1A stellt eine mögliche Ausführungsform eines Körpers 1 eines nicht erfindungsgemäßen Produktbehälters in der Draufsicht dar, bestehend aus einem ringförmigen Außenteil 2 und einem scheibenförmigen zentralen Teil 3, das mit speichenförmigen Verbindungsteilen 4a,4b,4c mit Außenteil 2 verbunden ist.

In den Räumen zwischen den Speichen ist eine Gaze 5 enthalten, die als Filter dient.

Figur 1B stellt den Körper 1 in der Seitenansicht dar. Der Körper 1 wird bevorzugt aus einem hitzebeständigen Kunststoff hergestellt, wie Polypropylen, und wird zum Beispiel in einem Spritzgußverfahren hergestellt, wobei Gaze 5 integral in Körper 1 aufgenommen wird, in einer für den Fachmann auf der Hand liegenden Weise. Erwünschtenfalls kann Gaze 5 auch im nachhinein angebracht werden, zum Beispiel geleimt.

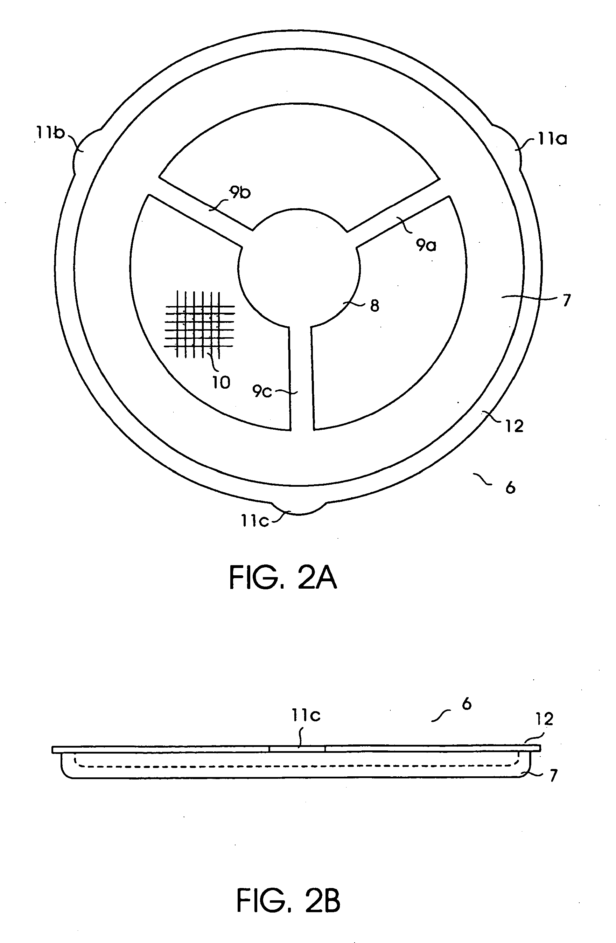

Figur 2A stellt eine mögliche Ausführungsform eines Deckels 6 eines nicht erfindungsgemäßen Produktbehälters in der Draufsicht dar, bestehend aus einem ringförmigen Außenteil 7 und einem scheibenförmigen zentralen Teil 8, das mit speichenförmigen Verbindungsteilen 9a, 9b, 9c mit Außenteil 7 verbunden ist.

In den Räumen zwischen den Speichen ist eine Gaze 10 enthalten, die als Filter dient. Deckel 6 ist derart dimensioniert, dass er einigermaßen klemmend in Körper 1 eingepresst werden kann, wobei das scheibenförmige zentrale Teil 8 dazu benutzt werden kann, den Deckel 6 in den Körper 1 zu pressen. Deckel 6 ist weiter mit drei Vorsprüngen 11a, 11b, 11c versehen, die einigermaßen aus dem Körper 1 herausragen, so dass Deckel 6 wieder einfach entfernt werden kann, woraufhin zum Beispiel ein in Körper 1 vorhandenes Produkt entfernt werden kann. Außenteil 7 ist schüsselförmig ausgeführt, derart dass das zentrale Teil 8, Verbindungsteile 9a, 9b, 9c und Gaze 10 einigermaßen vertieft liegen, während eines Randes 12 von Außenteil 7 plan ausgeführt ist und in einem Gebrauchszustand zusammen mit einer in dieser Figur nicht gezeigten Kaffeemaschine eine Abdichtung bildet, und zwar derart dass zugeführtes heisses Wasser über die Gaze 10 wegfließen soll.

Figur 2B stellt Deckel 6 in der Seitenansicht dar, mit Außenteil 7, versehen mit Rand 12 und Vorsprüngen 11a, 11b, 11c, wovon in dieser Figur nur Vorsprung 11c sichtbar ist. Deckel 6 wird bevorzugt hergestellt aus einem hitzebeständigen Kunststoff, wie Polypropylen und wird in einem Spritzgußverfahren hergestellt, wobei die Gaze 10 integral wird aufgenommen in Deckel 6, in einer für den Fachmann auf der Hand liegenden Weise. Erwünschtenfalls kann die Gaze 10 auch im nachhinein angebracht werden, zum Beispiel geleimt.

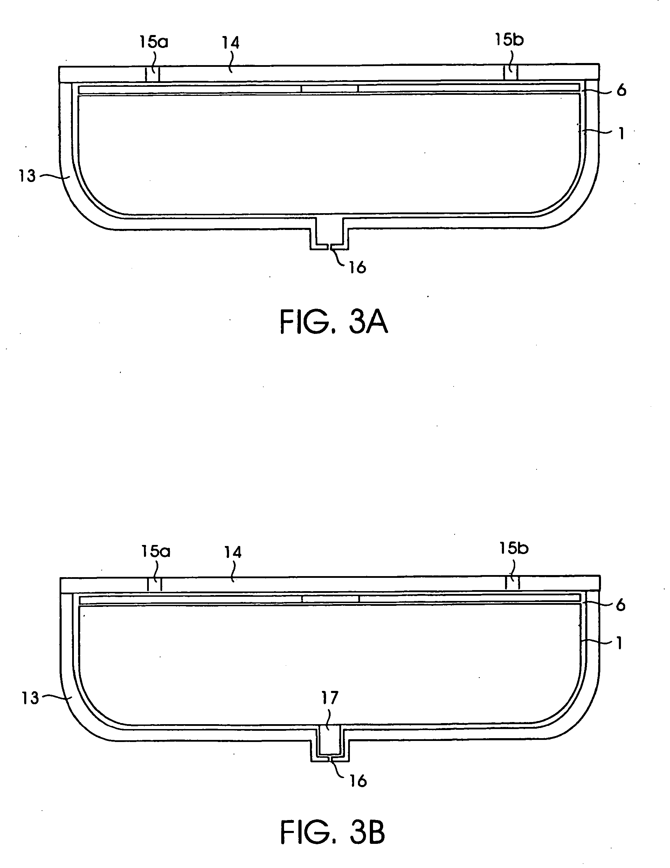

Figur 3A stellt schematisch einen in eine nur zum Teil dargestellten Kaffeemaschine eingesetzten nicht erfindungsgemäßen Produktbehälter dar. Der Produktbehälter, bestehend aus Körper 1 und Deckel 6 ist geschlossen und gefüllt mit einem Produkt, wie gemahlenem Kaffee, von dem ein Aufguß hergestellt werden soll. Dazu wird der Produktbehälter in ein schüsselförmiges Organ 13 gesetzt, das Teil der Kaffeemaschine ist. Daraufhin wird ein Deckel 14, der ebenfalls Teil der Kaffeemaschine ist, auf das schüsselförmige Organ 13 gestellt und wird durch eine Reihe von Zufuhrlöchern 15a, 15b, .. heißes Wasser in den geschlossenen Raum, gebildet von dem schüsselförmigen Organ 13 und dem Deckel 14 eingeleitet, wobei Rand 12, erkennbar in Figur 2, am Deckel 6 für eine ausreichende Abdichtung sorgt. Dieses heiße Wasser wird dann zu einem erheblichen Teil den Körper 1 durchlaufen und der so erhaltene Aufguß wird über eine kleine Öffnung 16 in dem schüsselförmigen Organ 13 abgeführt. Öffnung 16 ist klein, damit einige Aufgüsse dann eine gewisse Schaumbildung zeigen, die vom Benutzer geschätzt wird.

Figur 3B stellt schematisch einen in eine Kaffeemaschine eingesetzten erfindungsgemäßen Produktbehälter dar, vollständig entsprechend der in Figur 3 dargestellten Situation. Körper 1 ist mit einem stiftförmigen Vorsprung 17 versehen, der an dem zentralen Teil 3 des Körpers 1 befestigt ist und der derart dimensioniert ist, dass er in Gebrauchszustand über der Öffnung 16 endet, wobei zwischen dem stiftförmigen Vorsprung 17 und der Öffnung 16 ein Spalt offenbleibt, dessen Höhe kleiner als der Durchmesser der Öffnung 16 ist. Auf diese Weise kann der Aufguß Öffnung 16 erreichen, während vermieden wird, dass an der Außenseite des Produktbehälters klebende Teilchen, wie gemahlener Kaffee, die Öffnung 16 verstopfen.

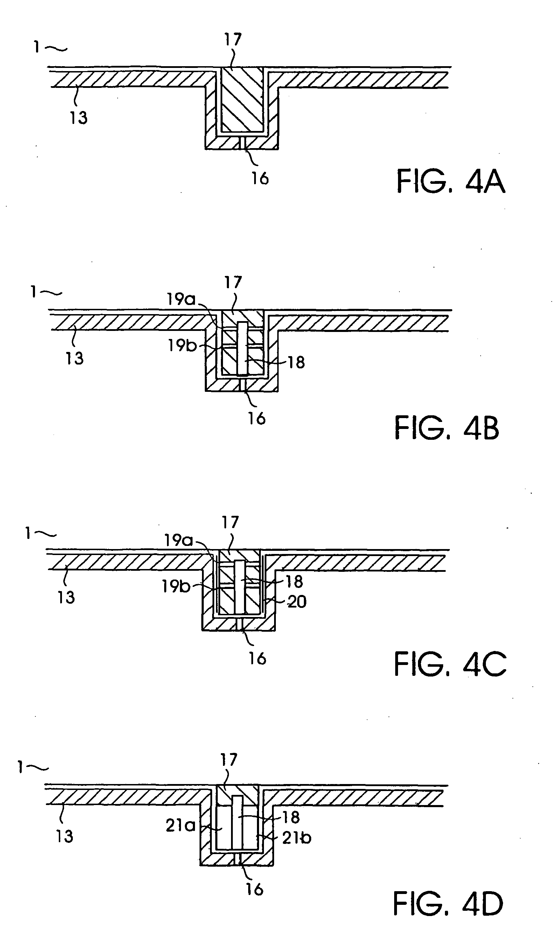

Figur 4A stellt mehr im Detail eine mögliche Ausführungsform eines stiftförmigen Vorsprungs 17 dar, befestigt an Körper 1. Klar ist, dass für eine gute Wirkung des stiftförmigen Vorsprungs 17, das heißt um zu vermeiden, dass Öffnung 16 verstopft wird, relativ hohe Anforderungen gestellt werden an die Toleranzen des Produktbehälters und des schüsselförmigen Teils 13.

Figur 4B stellt einen alternativen stiftförmigen Vorsprung 17 dar, bei dem diese Anforderungen an die Toleranzen erheblich geringer sind. Der stiftförmige Vorsprung 17 ist mit einem zentralen Schacht 18 versehen, der an die Öffnung 16 anschliesst und ist ausserdem mit einer Reihe von Löchern 19a, 19b, .. versehen, die in dem zentralen Schacht 18 münden. Indem die Löcher 19a, 19b, .. mit einem kleineren Durchmesser als der Durchmesser der Öffnung 16 ausgestaltet werden, kann man vermeiden, dass die Öffnung 16 verstopft wird. Der stiftförmige Vorsprung 17 kann nun problemlos auf den Boden des schüsselförmigen Teils 13 ruhen. Es ist sogar möglich, den stiftförmigen Vorsprung relativ lang auszugestalten, wobei die Verbindungsteile 4a, 4b, 4c sichtbar in Figur 1, einigermaßen einfedern können. Dies hat den zusätzlichen Vorteil, dass der Produktbehälter nach der Benutzung einfach ausgenommen werden kann.

Figur 4C stellt einen weiteren alternativen stiftförmigen Vorsprung 17 dar, der nahezu dem in der Figur 4B gezeigten stiftförmigen Vorsprung entspricht, bei dem jedoch die Löcher 19a, 19b, .. einen erheblich grösseren Durchmesser aufweisen können. Um zu vermeiden, dass die Öffnung 16 verstopft wird, ist auf den stiftförmigen Vorsprung 17 eine kleine Gaze 20 aufgeschoben, die verhindert, dass Teilchen in den zentralen Schacht 18 vordringen.

Figur 4D stellt einen weiteren alternativen stiftförmigen Vorsprung 17 dar, bei dem die Löcher 19a, 19b, .. durch von der Unterseite des stiftförmigen Vorsprungs 17 aus verlaufende Schlitze 21a, 21b, .. ersetzt worden sind.

Indem die Breite der Schlitze ausreichend klein zu wählen, kann wiederum verhindert werden, dass Teilchen in den zentralen Schacht 18 vordringen und die Öffnung 16 verstopfen. Ein sehr bedeutender Vorteil ist, dass die Schlitze 21a, 21b, .. wie ebenfalls die zentrale Öffnung 18 einfach während des Spritzgußverfahrens angebracht werden können.

## Patentansprüche

1. Produktbehälter, umfassend einen zum Teil für Flüssigkeit durchlässigen Körper (1), der gefüllt werden kann mit einem Produkt, wie gemahlenem Kaffee, und einen zum Teil für Flüssigkeit durchlässigen Deckel (6), der lösbar auf dem Körper (1) befestigt werden kann und bei dem der Körper (1) und der Deckel (6) jeweils ein ringförmiges Außenteil (2; 12) umfassen sowie ein scheibenförmiges zentrales Teil (3; 8), das mit speichenförmigen Verbindungsteilen (4a-4c; 9a-9c) mit dem Außenteil verbunden ist, **dadurch gekennzeichnet, dass** das scheibenförmige zentrale Teil (3) des Körpers (1) von außen mit einem stiftförmigen Vorsprung (17) versehen ist.

2. Produktbehälter nach Anspruch 1, **dadurch gekennzeichnet, dass** der stiftförmige Vorsprung (17) jedenfalls zum Teil mit einem zentralen Schacht (18) und mit wenigstens einem Verbindungskanal (19a-19b) zwischen dem zentralen Schacht (18) und einer Außenseite des stiftförmigen Vorsprungs (17) versehen.

3. Produktbehälter nach Anspruch 2, **dadurch gekennzeichnet, dass** der Verbindungskanal (19a-19b) an der Außenseite des stiftförmigen Vorsprungs (17) mit Gaze (20) bedeckt ist.

4. Produktbehälter nach Anspruch 2, **dadurch gekennzeichnet, dass** der wenigstens Verbindungskanal (19a-19b) wenigstens einem von einem freien Ende des stiftförmigen Vorsprungs (17) aus verlaufenden Schlitz (21a-21b) umfasst.

5. Produktbehälter nach einem oder mehreren der vorhergehenden Ansprüche, **dadurch gekennzeichnet, dass** der Körper (1) und der Deckel (6) aus Kunststoff hergestellt sind.

6. Produktbehälter nach einem der vorhergehenden Ansprüche, **dadurch gekennzeichnet, dass** das scheibenförmige zentrale Teil (3,8) und die Speichen (4a-4c; 9a-9c) eine Unterstützung für ein für Flüssigkeit durchlässiges Teil bilden.

7. Produktbehälter nach Anspruch 6, **dadurch gekennzeichnet, dass** das für Flüssigkeit durchlässige Teil aus Gaze (5; 10) hergestellt ist.

8. Produktbehälter nach einem der vorhergehenden Ansprüche, **dadurch gekennzeichnet, dass** der Deckel (6) an einem Außenrand (12) mit Vorsprüngen (11a-11c) versehen ist.

## Claims

1. Product container comprising a partially liquid-permeable vessel (1), which can be filled with a product such as ground coffee, and a partially liquid-permeable cover (6), which can be detachably fixed to the vessel (1), the vessel (1) and cover (6) each comprising an annular outer part (2; 12) and a disc-shaped central part (3; 8) which is connected to the outer part via spoke-like connection parts (4a-4c; 9a-9c), **characterised in that** the disc-shaped central part (3) of the vessel (1) is provided with a pin-shaped projection (17) on the outside.

2. Product container according to claim 1, **characterised in that** the pin-shaped projection (17) provided, at least in part, with a central duct (18) and with at least one connection channel (19a-19b) between the central duct (18) and an outer side of the pin-shaped projection (17).

3. Product container according to claim 2, **characterised in that** the connection channel (19-19b) is covered with gauze (20) on the outside of the pin-shaped projection (17).

4. Product container according to claim 2, **characterised in that** the at least one connection channel (19a-19b) comprises at least one slot (21a-21 b) extending from a free end of the pin-shaped projection (17).

5. Product container according to one or more of the preceding claims, **characterised in that** the vessel (1) and the cover (6) are made of plastics material.

6. Product container according to any one of the preceding claims, **characterised in that** the disc-shaped central part (3; 8) and the spokes (4a-4c; 9a-9c) form a support for a liquid-permeable component.

7. Product container according to claim 6, **characterised in that** the liquid-permeable component is made of gauze (5; 10).

8. Product container according to any one of the preceding claims, **characterised in that** the cover (6) is provided with projections (11a-11c) on an outer edge (12).

## Revendications

1. Conteneur de produit, comprenant un corps (1) partiellement perméable au fluide, qui peut être rempli d'un produit, comme du café moulu, et un couvercle (6) partiellement perméable au fluide qui peut être fixé sur le corps (1) de manière amovible et sur lequel le corps (1) et le couvercle (6) comprennent respectivement une partie extérieure (2 ; 12) annulaire ainsi qu'une partie centrale (3 ; 8) en forme de disque, qui est reliée à la partie extérieure avec des éléments de liaison (4a - 4c ; 9a - 9c) en forme de rayons, **caractérisé en ce que** la partie centrale (3) en forme de disque du corps (1) est dotée de l'extérieur d'une saillie (17) en forme de goupille.

2. Conteneur de produit selon la revendication 1, **caractérisé en ce que** la saillie (17) en forme de goupille est dotée en tout cas en partie d'un puits central (18) et d'au moins un canal de liaison (19a - 19b) entre le puits central (18) et un côté extérieur de la saillie (17) en forme de goupille.

3. Conteneur de produit selon la revendication 2, **caractérisé en ce que** le canal de liaison (19a - 19b) est recouvert de gaze (20) au niveau du côté extérieur de la saillie (17) en forme de goupille.

4. Conteneur de produit selon la revendication 2, **caractérisé en ce que** l'au moins un canal de liaison (19a - 19b) comprend au moins une fente (21a - 21b) s'étendant depuis une extrémité libre de la saillie (17) en forme de goupille.

5. Conteneur de produit selon une ou plusieurs des revendications précédentes, **caractérisé en ce que** les corps (1) et le couvercle (6) sont fabriqués en matière plastique.

6. Conteneur de produit selon l'une quelconque des revendications précédentes, **caractérisé en ce que** la partie centrale (3 ; 8) en forme de disque et les rayons (4a - 4c ; 9a - 9c) forment un support pour une partie perméable au fluide.

7. Conteneur de produit selon la revendication 6, **caractérisé en ce que** la partie perméable au fluide est fabriquée en gaze (5 ; 10).

8. Conteneur de produit selon l'une quelconque des revendications précédentes, **caractérisé en ce que** le couvercle (6) est doté de saillies (11a - 11c) au niveau d'un bord extérieur (12).
